# EUROPEAN PATENT SPECIFICATION

(11) **EP 3 934 346 B1**
(45) Date of publication and mention of the grant of the patent: **07.08.2024**
(21) Application number: 20183543.6
(22) Date of filing: 01.07.2020
(51) Int. Cl.: H04W 72/04, H04W 72/23

(54) **USER EQUIPMENT OPERATION DURING AN INACTIVE STATE**
BETRIEB EINER BENUTZERAUSRÜSTUNG WÄHREND EINES INAKTIVEN ZUSTANDS
FONCTIONNEMENT D'ÉQUIPEMENT UTILISATEUR PENDANT UN ÉTAT INACTIF

(43) Date of publication of application: 05.01.2022
(73) Proprietor: Nokia Technologies Oy, 02610 Espoo (FI)
(72) Inventor: LASELVA, Daniela, 9270 Klarup (DK); ROSA, Claudio, DK-8920 Randers (DK); PRATAS, Nuno K., 9260 Gistrup (DK)
(74) Representative: Cohausz & Florack

(56) References cited:
- WO-A1-2018/166345
- WO-A1-2019/217829
- US-A1- 2021 120 536
- ZTE CORPORATION ET AL: "Motivation of smalldata enhancements in NR", vol. TSG RAN, no. Sitges, Spain; 20191209 - 20191212, 2 December 2019 (2019-12-02), XP051834221, Retrieved from the Internet <URL:https://ftp.3gpp.org/tsg_ran/TSG_RAN/TSGR_86/Docs/RP-192573.zip RP-192573_smallDataMotivation.docx> [retrieved on 20191202]
- ZTE CORPORATION: "Work Item on NR smalldata transmissions in INACTIVE state", vol. TSG RAN, no. Sitges, Spain; 20191209 - 20191212, 22 June 2020 (2020-06-22), XP051903653, Retrieved from the Internet <URL:https://ftp.3gpp.org/tsg_ran/TSG_RAN/TSGR_88e/Docs/RP-200954.zip RP-200954_RP-193252_WID_NR_smallData-rm.doc> [retrieved on 20200622]
- "3rd Generation Partnership Project; Technical Specification Group Radio Access Network; NR; Medium Access Control (MAC) protocol specification (Release 16)", vol. RAN WG2, no. V16.0.0, 9 April 2020 (2020-04-09), pages 1 - 141, XP051893926, Retrieved from the Internet <URL:ftp://ftp.3gpp.org/Specs/archive/38_series/38.321/38321-g00.zip 38321-g00.docx> [retrieved on 20200409]

## Description

### TECHNOLOGICAL FIELD

Embodiments of the present disclosure relate to user equipment operation during an inactive state, and the operations of the network that support user equipment operation during the inactive state.

### BACKGROUND

A base station can perform a beam alignment procedure between the base station (e.g. gNB) and a terminal node (e.g. UE), in connected state (e.g. RRC CONNECTED state). The base station is in control (it sends a beam change command) but it is terminal assisted (e.g. the UE makes measurements and reports periodically the best beams to aid beam selection at the network). Whenever this beam tracking fails (e.g. when the number of beam failure instance indications from the physical layer reaches a configured threshold before a configured timer expires, the terminal node enacts a beam failure detection and recovery procedure.

A terminal node can be in other states than the connected state, for example an idle state or an inactive state. The inactive state is a state with low signalling overhead and low power consumption, and, currently, no beam tracking is performed.

WO 2019/217829 A1 discloses (Abstract) Non-Orthogonal Multiple Access (NOMA) transmissions in which sequence collision is mitigated or eliminated by exploiting the randomness nature of user specific reference bits and data bits. Further, methods, systems, and devices that use NOMA for small data transmissions are disclosed.

### BRIEF SUMMARY

According to various, but not necessarily all, embodiments there is provided an apparatus comprising means for:
receiving, at a user equipment (UE) from a base station provisioning of a plurality of pre-configured radio resources for data transmission during an inactive state of the UE
wherein a pre-configured radio resource is associated with a set of downlink transmission beams of the base station
acquiring at the UE validity information associated with one or more said pre-configured resources;
using at least the validity information to determine, for use, a valid preconfigured radio resource.

In some but not necessarily all examples, the pre-configured resources are Random Access Channel (RACH) preambles and/or are Physical Uplink Shared Channel (PUSCH) pre-configured resources associated with PUSCH.

In some but not necessarily all examples, the apparatus comprises means for uplink data transmission during an inactive state using the determined valid pre-configured radio resource.

In some but not necessarily all examples, the uplink data transmission uses at least one of a plurality of modes for uplink data transmission. In some examples, the plurality of modes for uplink data transmission comprise at least one mode that uses pre-configured PUSCH uplink resources and one mode that does not use pre-configured PUSCH uplink resources. In some examples, the plurality of modes for uplink data transmission comprises at least a 4-step random access mode for data transmission, a 2-step random access mode for data transmission, and a configured grant mode for data transmission.

In some but not necessarily all examples, the validity information is received from the network.

In some but not necessarily all examples, the apparatus comprises mean for receiving the validity information from the network, wherein the validity information comprises: radio quality based thresholds and/or an indication, directly or indirectly, of one or more valid preconfigured resources.

In some but not necessarily all examples, the apparatus comprises means configured to avoid using a radio resource associated with a strongest transmission beam and falling-back to a 4-step RACH based data transmission mode, if the radio resource is an invalid radio resource.

In some but not necessarily all examples, the transmission beams associated with the pre-configured radio resource are downlink transmission beams of a base station and wherein the association is direct or indirect.

In some but not necessarily all examples, the apparatus comprises means for estimating a strength of one or more of the transmission beams, and using the estimated strength to determine a valid preconfigured radio resource.

In some but not necessarily all examples, a strength of beams for uplink data , can be based on identifying a strongest valid beam for reception at base station of uplink data transmission.

In some but not necessarily all examples, the apparatus comprises means for selecting at least one combination from possible combinations of:
(i) one of a plurality of modes for uplink data transmission during an inactive state of the UE; and
(ii) at least a preconfigured resource that is associated with a set of one or more beams at a base station.

In some but not necessarily all examples, the apparatus comprises means for switching to a new mode of data transmission, wherein at least a set-up procedure for the new mode of data transmission comprises configuration of radio resources for an aligned beam.

In some but not necessarily all examples, the apparatus comprises means for switching from a mode of data transmission without alignment to a beam at the base station or without sufficient alignment to a beam at the base station to a new mode of data transmission, wherein at least a set-up procedure for the new mode of data transmission comprises configuration of radio resources for an aligned beam at the base station.

In some but not necessarily all examples, the apparatus comprises means configured to: in dependence upon a current beam not being the strongest beam, using the validity information to select, for use, a combination of a configured grant mode for uplink data transmission and the strongest beam; in dependence upon there being no beam sufficient for a configured grant mode for uplink data transmission, using the validity information to select, for use, one or more combinations of a random access mode for uplink data transmission and a strongest beam
In some but not necessarily all examples, the apparatus comprises means for:
using the validity information to select, for use, a valid combination from possible combinations of: one of a plurality of modes for uplink data transmission; and an estimated strongest available beam for reception of uplink data transmission.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3A shows another example of the subject matter described herein;
FIG. 3B shows another example of the subject matter described herein;
FIG. 4A shows another example of the subject matter described herein;
FIG. 4B shows another example of the subject matter described herein;
FIG. 5A shows another example of the subject matter described herein;
FIG. 5B shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein;
FIG. 11 shows another example of the subject matter described herein;
FIG. 12 shows another example of the subject matter described herein;
FIG. 13 shows another example of the subject matter described herein;
FIG. 14 shows another example of the subject matter described herein.

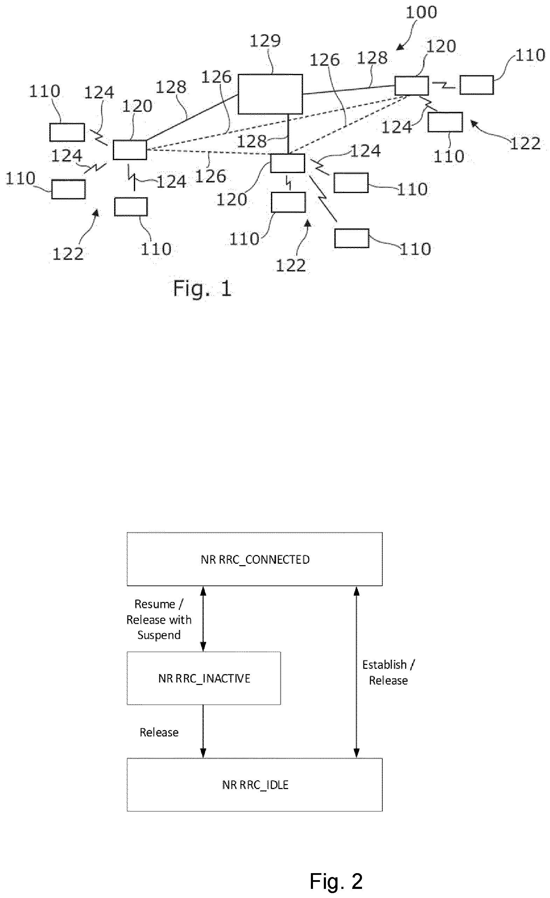

Figures 2, 3A, 3B, 4A, 4B, 5A, 5B, 9 and 11 represent unclaimed aspects.

### DETAILED DESCRIPTION

Examples will be described that can enable uplink data transmission by a user equipment in an inactive state. Examples will be described that can enable uplink data transmission by a user equipment in an inactive state to a base station that is using uplink reception beams, without requiring the user equipment, during the inactive state, to perform beam tracking (and associated signalling) either at all or with the same power consumption and/or signalling overhead as in the connected state. Examples will be described that enable detecting (and recovering from) lack of beam validity for uplink data transmission e.g. because of a change in alignment. Examples will be described that enable a user equipment in inactive state to perform data transmissions efficiently while avoiding the signaling overhead and delay associated with a transition from the inactive state the connected state to perform a data transmission.

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The one or more core nodes 129 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

The access node 120 is a cellular radio transceiver. The terminal nodes 110 are cellular radio transceivers.

In the example illustrated, the cellular network 100 is a third generation Partnership Project (3GPP) network in which the terminal nodes 110 are user equipment (UE) and the access nodes 120 are base stations.

In some examples, the network 100 is an Evolved Universal Terrestrial Radio Access network (E-UTRAN). The E-UTRAN consists of E-UTRAN NodeBs (eNBs) 120, providing the E-UTRA user plane and control plane (RRC) protocol terminations towards the UE 110. The eNBs 120 are interconnected with each other by means of an X2 interface 126. The eNBs are also connected by means of the S1 interface 128 to the Mobility Management Entity (MME) 129.

In other examples, the network 100 is a Next Generation (or New Radio, NR) Radio Access network (NG-RAN). The NG-RAN consists of gNodeBs (gNBs) 120, providing the user plane and control plane (RRC) protocol terminations towards the UE 110. The gNBs 120 are interconnected with each other by means of an X2/Xn interface 126. The gNBs are also connected by means of the N2 interface 128 to the Access and Mobility management Function (AMF) 129.

FIG 2 illustrates a state machine for a terminal node 110 e.g. user equipment. The state machine comprises three different states: connected state, inactive state and idle state.

In the example illustrated, the terminal node 110 is user equipment and the states are RRC connected state, RRC inactive state and RRC idle state. In the particular example illustrated, the terminal node 110 is New radio (NR) user equipment and the states are NR RRC connected state, NR RRC inactive state and NR RRC idle state.

The states and transitions between the states are defined in the appropriate specifications. The inactive state can, in this example, only be entered from the connected state e.g. via radio resource control (RRC) release with suspend message. The inactive state can, in this example, be exited to the connected state via a RRC Resume or exited to the idle state via a RRC Release.

The RRC Release message with suspend is an RRC Release message that includes the suspend configuration information. It is a downlink message.

The inactive state is a state that has a first set of characteristics that are common with the idle state but not the connected state and a second set of characteristics that are common with the connected state but not the idle state.

In at least some examples, the first set of characteristics comprise mobility management by cell re-selection and the second set of characteristics comprise a security context for ciphering.

In the example illustrated, the inactive state is a state that is entered from the connected state. In the inactive state, a security context is retained from the connected state for ciphering but measurement and reporting for beam alignment, as performed in the connected state, is not supported.

The examples described below enable, in the inactive state, data transmission, for example, small data transmission, by the terminal node 110 (e.g. the UE) to the access node 120 (the base station e.g. gNB).

Data transmission can occur in the inactive state via one of a plurality of modes for uplink data transmission during the inactive state. In some examples, data is ciphered as per the security keys in the stored UE AS context.

The plurality of modes for uplink data transmission in the inactive state comprise at least one mode that uses pre-configured physical uplink shared channel (PUSCH) uplink resources and one mode that does not use pre-configured PUSCH uplink resources.

In at least some examples, the plurality of modes for uplink data transmission in the inactive state comprises at least a 4-step random access mode for data transmission, a 2-step random access mode for data transmission, and a configured grant mode for data transmission.

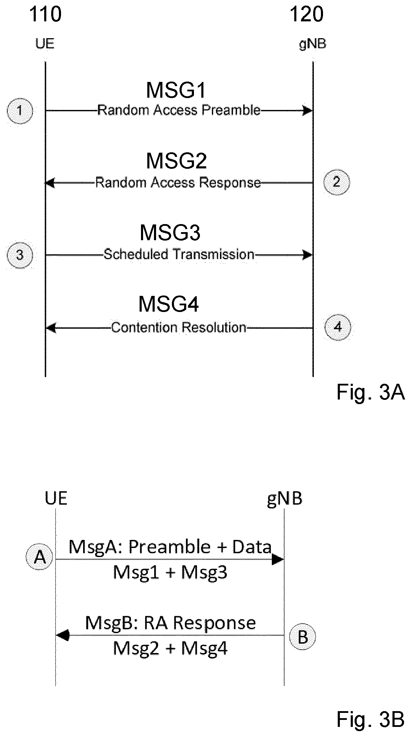

An example of a 4-step random access mode for data transmission in the inactive state is illustrated in FIG 3A. The user equipment 110 sends a Random Access Preamble (MSG 1) to the access node 120 using the physical uplink shared channel (PUSCH) and a Random Access Channel (RACH) preamble. The random access preamble used is determined by preconfigured radio resources. The preconfigured radio resources do not yet comprise preconfigured PUSCH radio resources. The access node 120 responds with a Random Access Response (MSG 2) which configured PUSCH resources. The user equipment 110 sends a Scheduled Transmission (MSG 3) to the access node 120 in PUSCH using the configured PUSCH resources. The access node 120 responds with a Contention Resolution (MSG 4). The Scheduled Transmission (MSG 3) is used to transmit the data using dynamically configured PUSCH resources.

An example of a 2-step random access mode for data transmission in the inactive state is illustrated in FIG 3B. The user equipment 110 sends a MsgA to the access node 120 in the physical uplink shared channel (PUSCH) using preconfigured PUSCH resources and a Random Access Channel (RACH) preamble. The access node 120 responds with a MsgB. The MsgA is used to transmit the data using the preconfigured PUSCH resources. The MsgA is equivalent to a combination of MSG1 and MSG3 of the 4-step procedure. The MsgB is equivalent to a combination of MSG2 and MSG4 of the 4-step procedure.

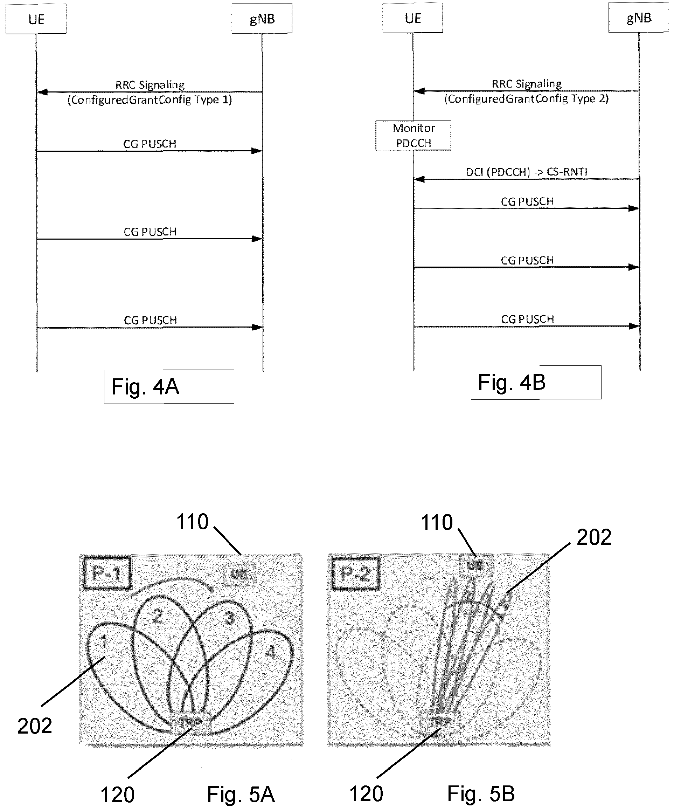

An example of configured grant mode for data transmission, in RRC Connected state, is illustrated in FIG 4A and 4B.

In the example illustrated it is possible to preconfigure uplink transmissions without the need to transmit a dynamic grant (e.g. Random Access Response) in correspondence of each uplink transmission occasion. The pre-configuration of these uplink PUSCH resources, the Configure Grant (CG) PUSCH resources, can happen according to two possible schemes. The actual uplink grant may either be configured via RRC (type1) as illustrated in FIG 4A or provided via a combination of RRC and PDCCH (addressed to CS-RNTI) (type2) as illustrated in FIG 4B. In at least some examples, in the inactive state, only type 1 (FIG 4A) is used for data transmission as no monitoring of PDCCH is required. Thus, configured grant-based resources of type 1 can be used by the UE to transmit in the inactive state. In a least some examples, such transmission is conditional on the UE having a valid timing advance (TA).

PUSCH resources are pre-configured for the configured grant mode for data transmission and the 2-step random access mode for data transmission. The pre-configured PUSCH resources enable the UE to use the pre-configured PUSCH resources for data transmission, for example, as described above (FIG 3B, 4A)
In at least some examples, PUSCH resources specify time and frequency resources in the PUSCH grid. That PUSCH resources allocate resource blocks (frequency resources) at given slot/symbols in the time domain. Pre-configured resources will include the PUSCH resources and associated transmit properties, including the Tx power, the modulation and coding scheme (MCS), demodulation reference signal (DMRS) ports, etc.

PDSCH/PUSCH DMRS is a special type of physical layer signal which functions as a reference signal for decoding PDSCH/PUSCH. Similarly, NR defines PBCH DMRS. A DMRS sequence can be referred to as a preamble sequence, and may be used directly for identification (e.g. if it is unique UE-specific). It can further be used for channel estimation. DMRS can be used for channel estimation and also for non-unique UE identification.

Collision resolution of UEs using the same preconfigured PUSCH resources (e.g. in CG-based data tranmsisison) is facilitated by the network assigning orthogonal DMRS. Multiple UEs can be pre-allocated with the same time-frequency resources and assigned orthogonal DMRS sequences to multiplex with the data to enable the network to separate/distinguish the transmitting UE(s). The DMRS sequence is primarily for channel estimation to enable the gNB to detect and equalize the transmission.

For the configured grant mode for data transmission, the provisioning of the pre-configured PUSCH resources may happen on transition from the connected state to the inactive state. For example, via radio resource control (RRC) signalling (e.g. at RRC release with suspend.

For the 2-step random access mode for data transmission, the provisioning of the pre-configured PUSCH resources may happen via system level signalling or radio resource control (RRC) signalling (e.g. via System Block Information (SIB) or via RRC release with suspend)
For the 4-step random access mode for data transmission, the provisioning of the pre-configured resources, for example the RACH preambles, may happen via a broadcast signalling (e.g. via SIB).

It will therefore be appreciated that uplink data transmission during an inactive state can occur using the determined valid pre-configured radio resource(s).

The pre-configured resources can be Random Access Channel (RACH) radio resources e.g. RACH preambles and/or Physical Uplink Shared Channel (PUSCH) pre-configured resources associated with PUSCH.

In at least some examples, the plurality of modes for uplink data transmission comprises at least one mode that uses pre-configured PUSCH uplink resources and one mode that does not use pre-configured PUSCH uplink resources.

The plurality of modes for uplink data transmission can comprise at least a 4-step random access mode for data transmission, a 2-step random access mode for data transmission, and a configured grant mode for data transmission.

In at least some examples, the network node 120 can communicate via spatially separated channels, this allows spatial modulation. The spatially modulated channels are often referred to as beams.

It is possible for a network node to use distinct spatial channels (beam-related channels) for uplink (reception) and for downlink (transmission). It is possible for a network node to use the same or overlapping spatial channels for uplink (reception) and for downlink (transmission).

It is also possible for a terminal node 110 to use distinct spatial channels for uplink (transmission) and for downlink (reception).

In the following it will be assumed that the network node 120 at least receives data via spatially separated channels (beams). The network node 120 can use distinct spatial channels for uplink (reception) and for downlink (transmission). The terminal node 110 can but does not need to use distinct spatial channels for its transmission or reception.

As illustrated in FIG 5A and 5B, an access node beam alignment procedure between the access node (e.g. gNB) and the terminal node (e.g. UE) comprises:
i) the access node 120 transmits probe signals in different directions using different transmission beams 202;
ii) the terminal node 110 performs measurements of the probe signals and provides feedback on the best beam 202.

In FIG 5A, the beams 202 used to transmit and receive by the access node 120 are wide and there is reduced spatial selectively.

In FIG 5B, the beams 202 used to transmit and receive by the access node 120 are narrow and there is increased spatial selectively.

The procedure (P-1) illustrated in FIG 5A can be performed first. Then the procedure (P-2) illustrated in FIG 5B can be performed as a refinement.

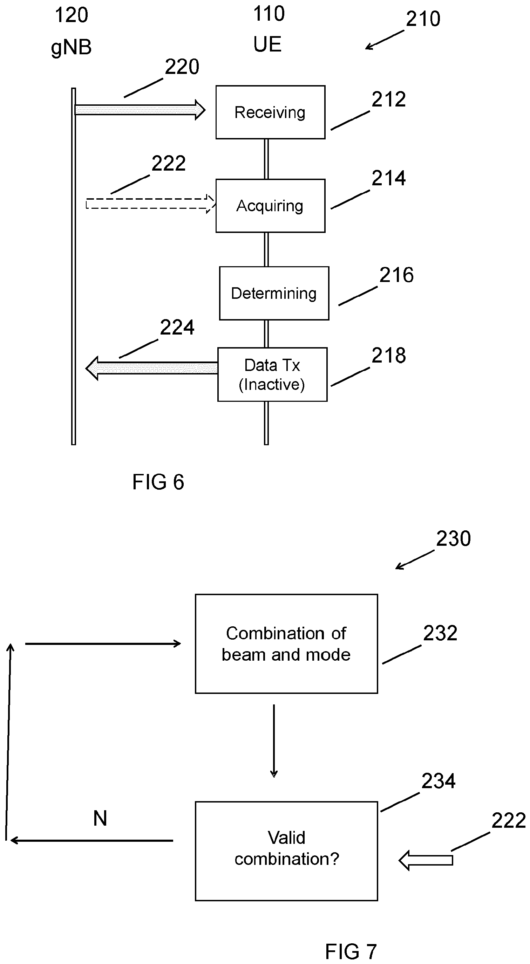

FIG 6 illustrates an example of data transmission by a terminal node 110 during the inactive state.

The apparatus 110, which is operable as user equipment 110, comprises:
a) receiving means 212 for receiving, at the user equipment (UE) 110 from a base station 120 provisioning 220 of a plurality of pre-configured radio resources 240 (not illustrated) for data transmission during an inactive state of the UE 110. A pre-configured radio resource 240 is associated with a set of one or more beams 202.
b) acquiring means 214 for acquiring at the UE 110 validity information 222 associated with one or more said pre-configured resources 240;
c) determining means 216 for using at least the validity information 222 to determine, for use, a valid preconfigured radio resource 240.

The apparatus 110 can also comprise transmit means 218 for uplink data transmission 224 during an inactive state using the determined valid pre-configured radio resource 240 (if any).

One or more of the steps of receiving, acquiring and determining can occur during the inactive state or in another state. The steps of receiving and acquiring can occur in any order (or together) before the step of determining.

The association between one or more beams 202 and the pre-configured radio resource 240 can be direct or indirect. In at least some examples, the one or more beams 202 are directly associated with the pre-configured radio resource 240 and are uplink reception beams of a base station 120. In at least some examples, the one or more beams 202 are indirectly associated with the pre-configured radio resource 240 and are downlink transmission beams of the base station 120.

For example, in at least some examples, the user equipment 110 comprises means for estimating a quality (e.g. strength, for example received power strength) of one or more of the downlink transmission beams of the base station 120, and for using the estimated quality (e.g. strength) to determine a valid preconfigured radio resource 240. A quality of a transmission beam 202 of the base station 120 can be measured, for example, by measuring the RSRP.

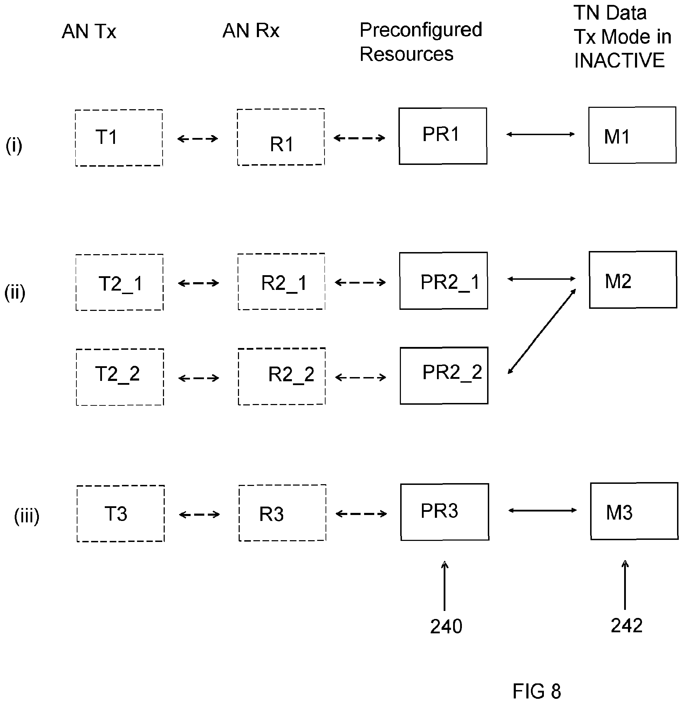

Thus, downlink (transmission) beams of the base station 120 have a measured quality. As illustrated in FIG 8, the downlink transmission beams T of the base station 120 can be associated with corresponding uplink (reception) beams R of the base station 120. Downlink beams T of the base station and uplink (reception) beams R of the base station 120 can correspond because they significantly overlap e.g. they occupy the same spatial channels and are spatially reciprocal. The measured quality of the downlink (transmission) beams T of the base station 120 can be assigned to the associated corresponding uplink (reception) beams R of the base station 120.

Each uplink (reception) beams Rn of the base station operates using pre-configured radio resources PRn, for example, as described above.

FIG 8 illustrates different associations from a downlink (transmission) beam(s) Tn of the base station 120 to the corresponding uplink (reception) beam(s) Rn of the base station to the pre-configured radio resources PRn of the corresponding uplink (reception) beam(s) Rn of the base station 120.

FIG 8 uses a grid arrangement. The first column headed "AN Tx" for access node transmission, schematically illustrates in different rows different access node downlink (transmission) beam(s) Tn. The second column headed "AN Rx" for access node reception, schematically illustrates in different rows different access node uplink (reception) beam(s) Rn. The third column headed "Preconfigured Resources" schematically illustrates in different rows different preconfigured resources PRn. The third column headed "TN Data Tx Mode in INACTIVE" for terminal node (TN) data transmission (Tx) mode in inactive state, schematically illustrates in different rows different data transmission modes Mn. The two headed arrows show associations.

If the measured quality of the downlink (transmission) beam(s) Tn of the base station 120 is sufficiently high, then the pre-configured radio resources PRn of the uplink (reception) beam(s) Rn of the base station 120 that correspond to the measured downlink (transmission) beam(s) Tn can be valid or conditionally valid. Conditionally valid means that one or more other criteria need to be satisfied for the pre-configured radio resources PRn to be valid.

An example of a criterion is that the corresponding uplink (reception) beam(s) Rn of the base station 120 is available. An example of a criterion is that the corresponding uplink (reception) beam(s) Rn of the base station 120 is not restricted.

An example of a criterion is that the corresponding uplink (reception) beam(s) Rn of the base station 120 is associated with a data transmission mode Mn that is available. An example of a criterion is that the corresponding uplink (reception) beam(s) Rn of the base station is associated with a data transmission mode Mn that is not restricted.

The determination can be based at least on the validity information 222. The validity information 222 can, for example, comprise a quality threshold and/or parameters for defining the conditional criteria. For example, the validity information 222 can identify which beams Rn are available and/or which beams Rn are restricted. For example, the validity information 222 can identify which data transmission modes Mn are available and/or which data transmission modes Mn are restricted. For example, the validity information 222 can identify which combinations of data transmission modes Mn and beams Rn (preconfigured radio resources PRn) are available and/or which combinations of data transmission modes Mn and beams Rn (preconfigured radio resources PRn) are restricted.

FIG 8(i) illustrates an example in which first preconfigured radio resources PR1 are associated with a first mode of data transmission M1 during the inactive state. The combination of the first data transmission mode M1 and the first preconfigured radio resources PR1 (for a first beam R1) are available and are not restricted. If the estimated quality of the first uplink beam T1 is sufficient then, subject to other conditions (if any), the first data transmission mode M1 can be used with the first preconfigured radio resources PR1. The estimated quality of the first uplink beam R1 can be based on a measured quality of the first downlink beam T1.

FIG 8(ii) illustrates an example in which two distinct sets of second preconfigured radio resources PR2_1, PR2_2 are associated with a second mode M2 of data transmission during the inactive state. The combination of the second data transmission mode M2 and a first one of the second preconfigured radio resources PR2_1 (for a first one of second beams R2_1) is available and is not restricted. If the estimated quality of the first one of the second beams R2_1 is sufficient then, subject to other conditions (if any), the second data transmission mode M2 can be used with the first one of the second preconfigured radio resources PR2_1. The combination of the second data transmission mode M2 and a second one of the second preconfigured radio resources PR2_2 (for a second one of second beams R2_2) is available and is not restricted. If the estimated quality of the second one of the second beams R2_2 is sufficient then, subject to other conditions (if any), the second data transmission mode M2 can be used with the second one of the second preconfigured radio resources PR2_2. The estimated quality of the uplink beams R2_1, R2_2 can be based on a measured quality of the respective downlink beams T2_1, T2_2.

If the second beams R2_1, R2_2 are available and the estimated quality of the first one of the second beams R2_1 is sufficient and the measured quality of the second one of the second beams R2_2 is sufficient, then, subject to other conditions (if any), the second data transmission mode M2 can be used with the second preconfigured radio resources PR2_m associated with the highest quality beam R2_m. In this example m is 1 or 2.

FIG 8(iii) illustrates an example in which third preconfigured radio resources PR3 are associated with a third mode of data transmission M3 during the inactive state. The combination of the third data transmission mode M3 and the third preconfigured radio resources PR3 (for a third beam R3) are available and are not restricted. If the estimated quality of the third uplink beam R3 is sufficient then, subject to other conditions (if any), the third data transmission mode M3 can be used with the third preconfigured radio resources PR3. The estimated quality of the third uplink beam R3 can be based on a measured quality of the third downlink beam T3.

FIG 7 illustrates an example of a method 230 of determining for use, a valid preconfigured radio resource 240, as previously described. The use can, for example, be in uplink data transmission using a determined combination of a mode Mn of uplink data transmission and preconfigured radio resources PRn.

Different particular preconfigured radio resources PRn are associated with different particular beam(s) Rn, as previously described. There are therefore valid associations of preconfigured radio resources PRn and particular beam(s) Rn.

The method illustrated in FIG 7 determines a valid combination of a data transmission mode Mn and preconfigured radio resources PRn (and associated beam beam(s) Rn).

At block 232, a putative (candidate) valid combination of a data transmission mode Mn and preconfigured radio resources PRn (and associated beam beam(s) Rn) is determined.

At block 234, the putative valid combination of a data transmission mode Mn and preconfigured radio resources PRn (and associated beam beam(s) Rn) is tested for validity using the validity information 222.

The validity information 222 is associated with one or more said pre-configured resources PRn, either directly or indirectly via associated beam(s) Tn, Rn. The associated beam(s) can for example be uplink (reception) beam(s) Rn of the base station 120 or downlink (transmission) beam(s) Tn of the base station 120.

If the putative valid combination of a data transmission mode Mn and preconfigured radio resources PRn (and associated beam beam(s) Rn) is tested to be valid, then the data mode Mn of the valid combination is used to transmit data 224 using the preconfigured radio resources PRn of the valid combination.

If the putative valid combination of a data transmission mode Mn and preconfigured radio resources PRn (and associated beam beam(s) Rn) is tested to be invalid, then at block 232 a new putative valid combination of a data transmission mode Mn' and preconfigured radio resources PRn' (and associated beam beam(s) Rn') is determined.

The method then moves to block 234. At block 234, the new putative valid combination of a data transmission mode Mn' and preconfigured radio resources PRn' (and associated beam beam(s) Rn') is tested for validity using the validity information 222. The method 230 repeats.

A UE 110 can therefore be configured to select a valid combination from possible combinations of:
(i) one of a plurality of modes Mn for uplink data transmission 224 during an inactive state of the UE 110; and
(ii) a beam-related uplink channel that is associated to a set of one or more beams Rn at a base station 120.

The beam-related uplink channel determines a preconfigured radio resource PRn for data transfer during an inactive state of the UE 110. The beam at the base station can be uplink (reception) beams Rn at the base station 120 or downlink (transmission) beams Tn at the base station 120. The preconfigured radio resource PRn can be pre-configured PUSCH radio resources or RACH radio resources.

In any examples, the step of acquiring at the UE 110 validity information 222 associated with one or more said pre-configured resources 240 can occur in any suitable manner.

In some but not necessarily all examples, the UE 110 receives the validity information 222 from the network. For example, the configured grant configuration information can comprise the validity information 222 in addition to all the other required parameters for configured grant. For example, the signalling that causes a transition to the inactive state (e.g. Release with suspend message) can comprise the validity information 222 in addition to all the other required parameters for the inactive state.

However, in other examples the validity information 222 can be obtained, for example, via information pre-loaded to the user equipment 110 by a manufacturer or a network operator or downloaded to the user equipment 110 by a network operator.

In at least some examples, the validity information 222 comprises:
radio quality based thresholds and/or an indication, directly or indirectly, of one or more valid preconfigured resources 240.

The radio quality based thresholds can for example be used in the assessment of different downlink beams Tn used by the base station to transmit to the UE 110. The radio quality based thresholds can, for example, be RSRP thresholds. RSRP refers to reference signal received power. It can be the average power received from a single Resource Element allocated to a Secondary Synchronization Signal. It could be combined received power signal strength from all antenna elements belonging to a single receive path.

The validity information 222 can directly indicate one or more valid pre-configured radio resources 240 by identifying the one or more valid pre-configured radio resources 240. The validity information 222 can indirectly indicate one or more pre-configured radio resources 240 by identifying the one or more base station downlink transmission beams Tn associated with a pre-configured radio resource PRn. The validity information 222 can indicate directly validity by indicating, one or more pre-configured radio resources 240 that are valid. The validity information 222 can indicate indirectly validity by indicating, directly or indirectly, one or more pre-configured radio resources 240 that are restricted (invalid) and therefore not usable.

As previously described, the validity information 222 can, for example, comprise parameters for defining the conditional criteria. For example, the validity information 222 can identify which beams Rn are available and/or which beams Rn are restricted. For example, the validity information 222 can identify which data transmission modes Mn are available and/or which data transmission modes Mn are restricted. For example, the validity information 222 can identify which combinations of data transmission modes Mn and beams Rn (preconfigured radio resources PRn) are available and/or which combinations of data transmission modes Mn and beams Rn (preconfigured radio resources PRn) are restricted.

Thus, the validity information 222 can enable or prevent use of configured grant for at least one beam Rn. For example, the validity information 222 can prevent use of configured grant for data transmission 224 unless there is a beam Rn sufficient for configured grant. For example, the validity information 222 can enable use of configured grant for data transmission 224 using a best available beam if it is sufficient for configured grant.

Thus, the validity information 222 can enable use of the best available beam Rn for uplink data transmission 224, and selection of a data transmission mode Mn that can be used with that beam Rn.

Thus, the validity information 222 can cause avoidance of using a preconfigured PUSCH radio resource associated with a strongest transmission beam and cause falling-back to a 4-step RACH based data transmission mode, if the preconfigured PUSCH radio resource is determined, from the validity information 222, to be an invalid radio resource.

In some examples, selection of a beam Rn (preconfigured radio resource PRn) is based on a data transmission mode Mn. That is there is a preference for a particular data transmission mode Mn, for example configured grant, and a bias towards finding a beam Rn (preconfigured configured grant PUSCH radio resource PRn) that supports that configured grant data transmission mode Mn.

For example, in some but not necessarily all examples, a user equipment 110 can maintain using the same data transmission mode Mn (e.g. configured grant), and the current pre-configured radio resources PRn_1 (a current beam Rn_1) despite the current beam not being the best beam or the current beam deteriorating in quality.

For example, in some but not necessarily all examples, a user equipment 110 can maintain using the same data transmission mode Mn (e.g. configured grant), with different pre-configured radio resources PRn_2 (a new different beam Rn_2) despite the new beam Rn_2 not being the best beam. In this example, the current beam Rn_1 is no longer sufficient and the new beam Rn_2 is sufficient (but not necessarily the best).

For example, in some but not necessarily all examples, a user equipment 110 can maintain using a current data transmission mode Mn using current/new pre-configured radio resources (current/new current beam) despite the current/new beam not being the best beam or the current beam deteriorating in quality. In this example, the beam used is sufficient (but not necessarily the best). In some examples, a change in beam can occur when a sufficiently better beam for that data transmission mode is available. In some examples, a change in beam can occur when the current beam for that data transmission mode is no longer sufficient. In at least some of these examples, when there is no beam that is sufficient for the preferred current data transmission mode (e.g. configured grant), then the data transmission mode can be switched to one or more other modes (e.g. 2-step RACH, 4-step RACH). The mode that is switched to can, for example, have a set-up procedure that comprises configuration of radio resources for an aligned beam. The new data mode of uplink transmission is therefore automatically aligned with an uplink (reception) beam R of the base station 120 improving reception quality.

Therefore, in at least some examples, the user equipment 110 is configured to switch from a mode of data transmission without alignment to a (reception) beam at the base station or without sufficient alignment to a (reception) beam at the base station 120 to a new mode of data transmission, wherein at least a set-up procedure for the new mode of data transmission 224 comprises configuration of radio resources for an aligned (reception) beam at the base station.

In the 2-step and the 4-step RACH procedures, the user equipment 110 can be configured to identify a new target (reception) beam Rn using a specific PRACH preamble.

The validity information 222 can, for example, define, for example using thresholds, one or more allowed combinations:
a) a combination of a configured grant mode for uplink data transmission and a current beam;
b) a combination of a configured grant mode for uplink data transmission and a strongest beam; and/or
c) a combination of a random access mode for uplink data transmission and a strongest beam.

In at least some examples, if a current beam is the strongest beam, the UE 110 uses the validity information to select, for use, a combination of a configured grant mode for uplink data transmission and the current beam.

In at least some examples, if a current beam is not the strongest beam, the UE 110 uses the validity information 222 to select, for use, a combination of a configured grant mode for uplink data transmission and the strongest beam (if possible).

In at least some examples, if there is no beam sufficient for a configured grant mode for uplink data transmission, the UE 110 uses the validity information 222 to select, for use, one or more combinations of a random access mode for uplink data transmission and a strongest beam (if possible).

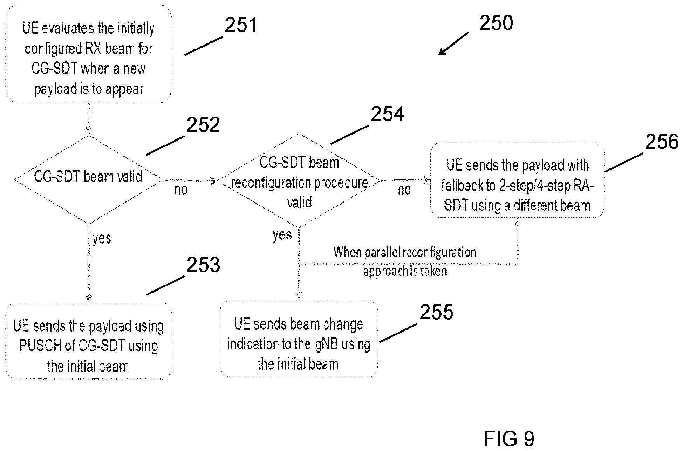

In the example method 250, illustrated in FIG 9, identification of the serving SSB(s) (and the associated L1-RSRP operation range) is made part of the CG configuration so that CG operation while in RRC Inactive can be made robust to any eventual beam failures.

The mechanism has a fine granularity which allows to trigger the gNB 120 to select a new serving beam (new serving SSB of the UE 110 and for the gNB 120 to use a new Rx beam associated with the new serving SSB) via either
(i) a procedure that reuses the CG configuration (in case the L1-RSRP of the serving SSB is within a pre-configured range) to request the beam change, or
(ii) the 2-step or 4-step RACH procedure (in case the L1-RSRP of the serving SSB is below a pre-configured threshold).

FIG 9 illustrates an example of a detection and recovery procedure upon beam change for a UE 110 in RRC Inactive configured with Configured Grant-based Small Data Transmission (CG-SDT).

The CG-SDT allocation is initially associated with at least one gNB Rx beam configuration Rn (pre-configured radio resources PRn) which is either explicitly indicated by the gNB 120 as part of the CG configuration, or implicitly determined by the UE 110.

The UE 110 detects whether the gNB Rx beam Rn, initially assigned for CG-SDT (Mn), is still valid, no longer the best one but still usable, or no longer valid; the detection is made prior to the time when a new payload is to appear (or appears) in the UE's buffer. At block 251, the UE 110 evaluates the gNB Rx beam Rn, initially assigned for CG-SDT (Mn), when a new payload appears.

Upon the above evaluation, at block 253, if the initial beam Rn is deemed valid for Mn, the UE 110, at block 252, uses CG-SDT resources PRn as configured initially for transmitting the payload via uplink transmission mode Mn (CG-SDT).

At block 254, it is determined if the initial beam Rn is deemed no longer the best one but still usable.

If so, at block 255, the UE 110 uses the initial beam Rn to trigger an Rx gNB beam change (beam reconfiguration for CG-SDT) by reporting via DMRS, UCI (or other methods) to the gNB 120 an indication that a beam change is needed to beam Rm. The beam reconfiguration has to be acknowledged by the network to be considered successful.

If not, at block 256, the UE 110 uses (falls-back) to RA data transmission (2-step or 4-step) for the transmission of the payload at block 256. Thus, if the initial beam is deemed no longer valid, the UE triggers a fallback to RA data transmission (2-step or 4-step). During the associated random access procedure, the UE 110 indicates to the gNB 120 the new best beam via preamble selection; the indication of the new beam will trigger an Rx gNB beam change. Upon the completion of the fallback, there are two foreseen options:
(i) the UE assumes no CG-SDT (i.e. it will operate in either RA data transmission (2-step or 4-step) unless explicitly configured by the gNB with configured grant data transmission once again; or
(ii) the UE resumes the CG-SDT, with the assumption that the gNB Rx as now been updated (when this is acknowledged by the gNB).

The gNB 120 ensures that after the Rx gNB beam change procedure 256 initiated by the UE, it will be listening with the correct Rx beam (according to the UE indication) at the UE's preconfigured PUSCH radio resources associated with the UE's CG-SDT.

The procedure at block 256 can be done in parallel to the procedure at block 255.The motivation for running both procedures 255. 256 in parallel is because the use of RA data transmission 2-step or 4-step may introduce delay due to e.g. preamble collision and/or contention resolution, thus the beam reconfiguration for CG-SDT may be faster depending on the scenario.

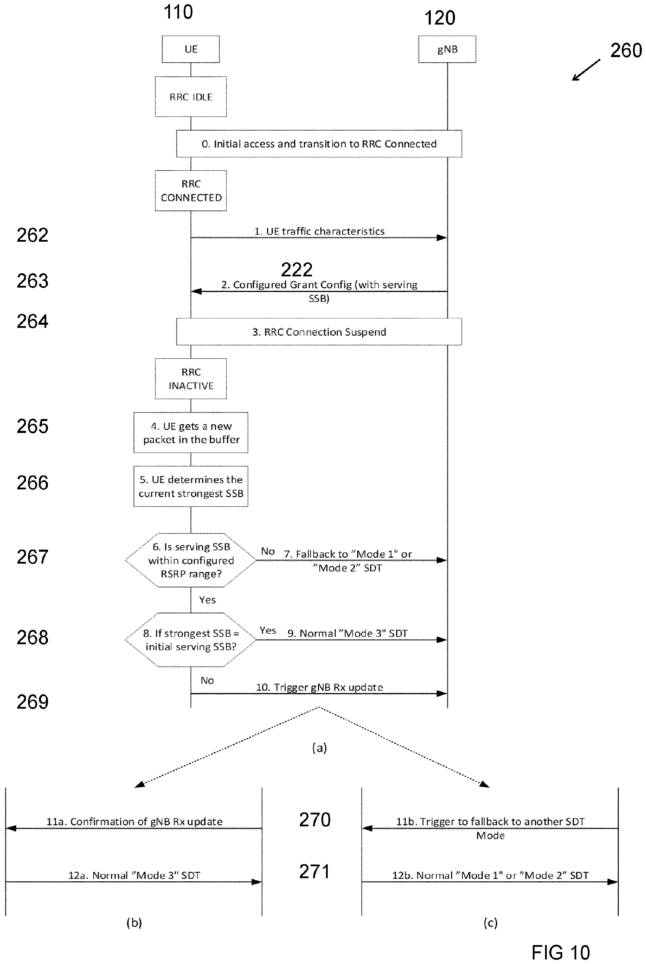

An example method 260 is illustrated in FIG 10.

The UE 110 performs the initial access procedure that allows the UE to transition from RRC IDLE to RRC Connected (either through 2-step or 4-step RACH procedure).

At block 262, the UE informs the gNB of its traffic characteristics, including the traffic periodicity and typical size of its periodic traffic data payload.

At block 263, the gNB 120 informs the UE 110 of the "Configured Grant Config" for RRC INACTIVE operation, which includes information of the beam (SSB) taking the role of serving SSB as well as validity information 222 including the L1-RSRP operation range where the serving SSB is assumed to be feasible for CG-SDT.

The indication of L1-RSRP operation range is required for the UE to detect if there is another SSB which has a stronger L1-RSRP and in turn can indicate that the gNB should be using another Rx beam for the CG-SDT reception associated with the UE. Furthermore, the L1-RSRP operation range includes a first threshold, where whenever the measured L1-RSRP of the serving SSB is over it, the CG-SDT operation should be assumed by the UE to be operating normally. While, if the measured L1-RSRP is below that first threshold the UE should monitor if there is another stronger SSB. The validity information 222 comprises a second threshold which allows the UE 110 to decide which recovery procedure to select when indicating to the network that the serving SSB needs to be changed. When the measured L1-RSRP of the current serving SSB is above the second threshold, then the current beam is sufficient and the UE can attempt the recovery procedure by utilizing the current serving SSB for CG-SDT. While, if the measured L1-RSRP of the serving SSB is below the second threshold the current beam is insufficient and the UE should attempt the recovery procedure via RA data transmission (2-step or 4-step).

The UE can also be configured with a third threshold, comprised in the validity information 222, related to the delta between the measured L1-RSRP of the serving SSB and the current strongest measured SSB. Whenever the delta is above the third threshold the UE can preemptively start the recovery procedure (even in the case where the measured L1-RSRP of the current serving SSB is above the first threshold); Additionally, the UE can be configured via the validity information 222 with a set of SSBs over which it will assume normal CG-SDT operation (i.e. as long as the strongest SSB is still among the set of configured SSBs).

In an alternative implementation, the UE 110 is configured with a normal "Configured Grant Config" for RRC CONNECTED operation, but then the UE is instructed to transition to RRC INACTIVE and maintain the same CG configuration. Note that in this case the UE still has to be informed of the serving SSB as well the validity information 222 including the L1-RSRP operation range. The later can be part of common RRC configuration, while the former can be either determined via the UE's own measurements or indicated by the gNB via a dedicated signaling message.

At block 264, the gNB 120 triggers the transition of the UE 110 from RRC CONNECTED to RRC INACTIVE.

At block 265, the UE 110 gets a new packet in the buffer from its application layer.

At block 266, the UE 110 determines the current strongest SSB. This can either be done after the packet arrives to the buffer or as part of a periodic procedure that is always listening to the gNB's periodic SSB sweep.

The UE measures in which part of the L1-RSRP operating range is the current serving SSB.

At block 267, the UE determines if the measured L1-RSRP of the serving SSB is below the second threshold.

If the UE determines that the measured L1-RSRP of the serving SSB is below the second threshold it triggers the recovery procedure using either RA (2-step or 4-step) in order to recover CG-SDT operation;

Alternatively, the UE transitions autonomously to RA data transmission (2-step or 4-step) i.e. beam-based condition fall-back, and only resumes CG-SDT if specifically configured by the gNB.

In somecases, the UE might no longer be in coverage of the cell and therefore will have to perform a cell reselection. This may be the case if the UE exceeds the maximum number of transmission attempts during RA data transmission (2-step or 4-step).

If the UE determines that the measured L1-RSRP of the configured serving SSB is above the first threshold, it checks at block 268 if there is a stronger SSB.

If the UE 110, does not find a stronger SSB or the delta between the current serving SSB and the strongest SSB is below the third threshold, the UE 110 proceeds with the normal CG- SDT operation.

If the UE 110 finds a stronger SSB and the delta between the current serving SSB and the strongest SSB is above the third threshold, the at block 269 the UE 110 then indicates via the preconfigured radio resources allocated for the CG-SDT (and still via the serving SSB) to the gNB 120 an identifier of this stronger SSB, so that the gNB can update its Rx beam accordingly.

This can be accomplished by a special message that indicates explicitly what is the current stronger SSB. Additionally, this message can also be used to reconfigure the type/amount of resources needed, in case the UE traffic characteristics changed.

For this to be possible it is necessary that the configuration of the Configured Grant includes the indication that the transmission of the UCI is allowed and that the UCI includes information about the current stronger SSB.

It can be accomplished instead by a new message design where the DMRS port used in the transmission indicates that there is a reconfiguration message payload instead of the usual SDT transmission. Alternatively, the DMRS port can indicate if the resource elements in the PUSCH payload should be interpreted as normal (i.e. modulation symbols that can be demodulated into data) or if instead these resource elements are associated with a robust sequence (which enables the operation with a larger SSB RSRP range). Then the selected sequence for transmission by the UE can encode what is the SSB with the highest RSRP that the UE is currently experiencing.

At block 270, the gNB 120 provides feedback to the UE request.

At block 270(a), the gNB 120 confirms the change of the gNB Rx beam and instructs the UE to continue with Mode CG-SDT. The gNB can then send a new ConfiguredGrantConfig (or a simplified version of this IE that only includes the delta from the original configuration).

At block 270(b), the gNB 120 triggers the fallback to another data transmission mode e.g. an RA data transmission mode (2-step or 4-step).

Additionally, the gNB 120 can at any time reconfigure the UE's data transmission mode either as a result from the UE's periodic RAN Notification Area (RNA) updates, via paging or other signalling directed to the UEs I-RNTI.

It is assumed that there is a correspondence between a gNB Rx beam Rn and the Tx beam Tn used for the transmission of the gNB's SSBs, which we denote as the serving SSB. We note that this is a valid assumption for serving UEs in RRC Inactive. This allows the gNB to change its Rx beam to receive the UEs' CG-SDT transmissions based on the indication of reception of the gNB RSs (e.g. SSBs).

The implementation details are described assuming there is one serving SSB associated with the "Configured Grant Config" for RRC INACTIVE operation. However, more generally the ""Configured Grant Config" for RRC INACTIVE could be associated with a set of at least one SSB. In this case, the L1-RSRP of the strongest SSB in the set is the L1-RSRP of the serving SSB.

In some examples, selection of a data transmission mode Mn in the inactive state is based upon a beam Rn (preconfigured radio resource PRn). That is there is a preference for using a highest quality, available beam Rn at the base station 120 for reception of the data transmission from the UE 110. There is a bias towards finding transmission mode Mn that supports a strongest beam Rn (preconfigured configured grant PUSCH radio resource PRn).

The UE 110 can use the validity information 222 to select, for use, a valid combination from possible combinations of: one of a plurality of modes Mn for uplink data transmission; and an estimated strongest available beam Rn for reception of uplink data transmission. It can select the best available mode Mn with the constraint of using the best available beam Rn. The validity information 222 can, for example, indicate allowed/restricted combinations of modes and beams.

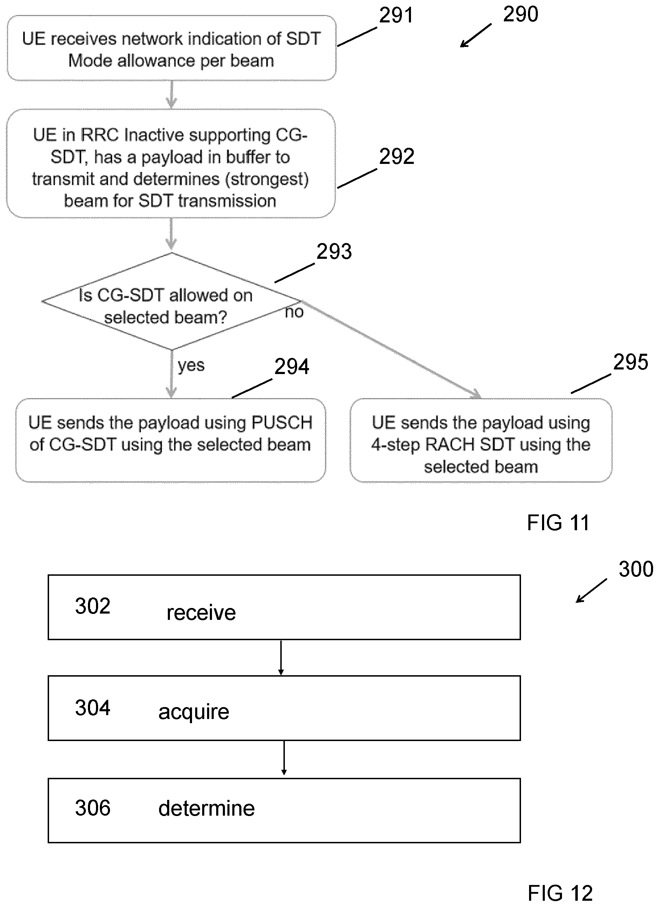

FIG 11 illustrates an example method 290 in which radio resources (PRACH / PUSCH / DMRS resources) for uplink data transmission in the inactive state are reserved (preconfigured) for each gNB Rx beam.

At block 291, UE 110 receives validity information 222 via a network indication of SDT Mode allowance per beam/SSB. this could be broadcasted via SIB. Alternatively, a UE-specific indication could be provided via RRC e.g. at RRC Release (to RRC Inactive) or upon an RNA update procedure (while in RRC Inactive).

The advantage of this later approach is that it enables the network to control the behaviour of each SDT UE individually.

As an example, the CG configuration for SDT can indicate to which beam(s) such CG configuration it applies to or does not apply, in turn, indicating in which beam(s) the UE can use the configured PUSCH resources for CG-SDT transmissions.

At block 292, the UE 110 in RRC Inactive state is trying to support CG-SDT, and has a data payload in buffer to transmit to the base station 120. The UE 110 has determined or does determine the strongest beam for reception of a data transmission by the UE 110 to the base station 120.

The UE has received from the base station 120 provisioning of a plurality of pre-configured radio resources for data transmission during an inactive state of the UE.

The UE 110 has acquired validity information 222 associated with one or more said pre-configured resources.

At block 293, the UE 110 uses at least the validity information 222 to determine, for use, a valid preconfigured radio resource. It determines whether CG-SDT is allowed on the strongest beam.

If CG-SDT is allowed on the strongest beam, then at block 294, the UE 110 sends the payload using the preconfigured configured grant PUSCH resources of the strongest beam this enabling CG-SDT on the strongest beam.

If CG-SDT is not allowed on the strongest beam, then at block 295, the UE 110 sends the payload using preconfigured RACH resources to enable RA 4-step data transmission mode.

Thus upon detecting that a strongest beam is a restricted beam for a particular data transmission mode (e.g. CG-SDT or RA 2-step data transmission), the UE 110 avoids using that 'restricted' mode and falls back instead to an allowed mode for the strongest beam (e.g. RA 2-step data transmission or RA 4-step data transmission). PRACH/PUSCH resources to be used by the UE 110, to perform uplink data transmission when in RRC Inactive, may be assigned in a contention-free manner to avoid collisions. However, if the capacity demand increases in a beam, the usage of these resources could be restricted by the network.

For CG-SDT, PUSCH and DMRS resources may be configured with an overbooking factor to avoid unused resources, which would otherwise be wasted. For RA 2-step data transmission, similar overbooking of PUSCH resources is possible by mapping multiple preambles to the same PUSCH resources. Also, the impact on the network capacity from reserving PUSCH resources and/or DMRS sequences for these data transmission modes with preconfigured PUSCH radio resource will depend on the amount of resources required by UEs in RRC Connected. The overbooking factor could be increased in case a larger capacity demand arises. However, a too large overbooking factor may deteriorate the networks capability of decoding uplink data transmissions by the UE 110 in inactive state.

As an example, if some beams in the cell are more loaded (i.e. the PUSCH resources when transmitting in these directions are largely occupied e.g. by UEs in RRC Connected mode), then CG-SDT and RA 2-step data transmission modes should not be used (restricted), and instead the fallback to RA 4-step data transmission mode will take place since the latter mode does not require reservation (pre-configuration) of PUSCH resources.

The method 290 described above in relation to FIG 11, can mitigate decoding issues that could affect uplink data transmission using preconfigured PUSCH radio resources (e.g. RA 2-step data transmission and CG-SDT) when the PUSCH/DMRS resource usage from UEs in RRC Connected mode in a beam increases.

The network can control the PUSCH load level in different beams by controlling the validity information 222 on a per beam level. The validity information 222 can, for example indicate for a cell, which set of beams which are allowed for CG-SDT or RA 2-step data transmission or, vice versa, a set of beams that are restricted from using CG-SDT or RA 2-step data transmission. PUSCH bottlenecks and decoding issues are avoided.

Similar means can be adopted to control the DMRS sequences or the RACH load in a beam. For the latter, the aim could be to keep the RACH collision rate below a target, by controlling the selection of RA 4-step data transmission and RA 2-step data transmission which make use of RACH preamble resources. For example, by indicating an access probability to be used by each UE to select when to perform RA data transmission. Alternatively, this functionality could be implemented by the form of an access mask, which would only allow a UE to access to specific 2-step or 4-step resources, whenever attempting a data transmission.

The preceding examples, enable the method illustrated in FIG 12. The method 300 comprises
at block 302, receiving, at a UE from a base station provisioning of a plurality of pre-configured radio resources for data transmission during an inactive state of the UE ,Wherein a pre-configured radio resource is associated with a set of transmission beams
at block 304, acquiring at the UE validity information associated with one or more said pre-configured resources;
at block 306, using at least the validity information to determine, for use, a valid preconfigured radio resource.

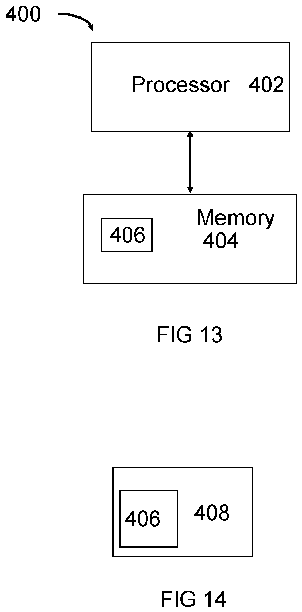

Fig 13 illustrates an example of a controller 400. Such a controller 400 can, for example, be used in user equipment 110. Such a controller 400 can, for example, be used in a base station 120.

implementation of a controller 400 may be as controller circuitry. The controller 400 may be implemented in hardware alone, have certain aspects in software including firmware alone or can be a combination of hardware and software (including firmware).

As illustrated in Fig 13, the controller 400 may be implemented using instructions that enable hardware functionality, for example, by using executable instructions of a computer program 406 in a general-purpose or special-purpose processor 402 that may be stored on a computer readable storage medium (disk, memory, etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 110 (or apparatus 120) when loaded into the processor 402. The computer program instructions, of the computer program 406, provide the logic and routines that enables the apparatus to perform the methods illustrated in Figs 6 to 12. The processor 402 by reading the memory 404 is able to load and execute the computer program 406.

The apparatus 110 therefore comprises:
at least one processor 402; and
at least one memory 404 including computer program code
the at least one memory 404 and the computer program code configured to, with the at least one processor 402, cause the apparatus 110 at least to perform:
   receiving, at a user equipment (UE) from a base station provisioning of a plurality of pre-configured radio resources for data transmission during an inactive state of the UE, wherein a pre-configured radio resource is associated with a set of transmission beams
   acquiring at the UE validity information associated with one or more said pre-configured resources;
   using at least the validity information to determine, for use, a valid preconfigured radio resource.

As illustrated in Fig 14, the computer program 406 may arrive at the apparatus 110, (or the apparatus 120) via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 406. The delivery mechanism may be a signal configured to reliably transfer the computer program 406. The apparatus 110, 120 may propagate or transmit the computer program 406 as a computer data signal.

Computer program instructions 406 for causing an apparatus 110 to perform at least the following or for performing at least the following:
receiving, at a UE froma base station provisioning of a plurality of pre-configured radio resources for data transmission during an inactive state of the UE
wherein a pre-configured radio resource is associated with a set of transmission beams
acquiring at the UE validity information associated with one or more said pre-configured resources;
using at least the validity information to determine, for use, a valid preconfigured radio resource.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 6 to 12 may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

It will be appreciated from the foregoing that the base station 120 comprises: means for transmitting, to a UE, validity information 222 for constraining beam-received uplink data transmission during an inactive state of the UE 110 to a valid combination from possible combinations of:
(i) one of a plurality of modes Mn for uplink data transmission;
(ii) a sub-set of beams Rn for reception of uplink data transmission.

A system comprises the user equipment and the base station 120.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The controller 400 can, for example, be a module.

In the above description reference is made to "using at least the validity information to determine, for use, a valid preconfigured radio resource". The outcome of this determining may be the use of a valid preconfigured radio resource. An example of such a use is uplink data transmission in the inactive state. In this example, the validity information is used to determine and use a valid preconfigured radio resource. It is possible, in some circumstances, for the outcome of the determining to be that there is no valid preconfigured radio resource. As a consequence, uplink data transmission in the inactive state does not occur at that time. The step of "using at least the validity information to determine, for use, a valid preconfigured radio resource" is therefore broader than determining and using. It encompasses not only the situation where the validity information is used to determine and use a valid preconfigured radio resource but also the situation where no valid preconfigured radio resource is available for use. The step of "using at least the validity information to determine, for use, a valid preconfigured radio resource" could be rephrased, in at least some examples, as "using at least the validity information to determine a validity of at least one of the said preconfigured radio resources". The phrase "determine a validity" can encompass determining a presence or absence of validity. The step of "using at least the validity information to determine, for use, a valid preconfigured radio resource" could be rephrased, in at least some examples, as "using at least the validity information to verify availability for use of a valid preconfigured radio resource" or "using at least the validity information to verify a preconfigured radio resource for use for data transmission during the inactive state of the UE". Verify in this context means ascertaining that a preconfigured radio resource is available to be used for data transmission during the inactive state of the UE.

The above described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus (110) comprising means for:
receiving, at a user equipment, UE, (110) from a base station (120) provisioning (220) of a plurality of pre-configured radio resources (240) for data transmission during an inactive state of the UE (110),
wherein a pre-configured radio resource (240) is associated with a set of one or more downlink transmission beams (202) of the base station;
acquiring at the UE (110) validity information (222) associated with one or more said pre-configured resources (240);
using at least the validity information to determine, for use, a valid preconfigured radio resource (240).

2. An apparatus as claimed in claim 1, wherein the pre-configured resources are Random Access Channel, RACH, preambles and/or are Physical Uplink Shared Channel, PUSCH, pre-configured resources associated with PUSCH.

3. An apparatus as claimed in claim 1 or 2, further comprising means for uplink data transmission during an inactive state using the determined valid pre-configured radio resource.

4. An apparatus as claimed in any preceding claim comprising means for receiving the validity information from the network, wherein the validity information comprises:
one or more radio quality-based thresholds and/or an indication, directly or indirectly, of one or more valid preconfigured resources.

5. An apparatus as claimed in claim 4, comprising means configured to avoid using a radio resource associated with a strongest transmission beam and falling-back to a 4-step RACH based data transmission mode, if the radio resource is an invalid radio resource.

6. An apparatus as claimed in any preceding claim wherein the association is direct or indirect.

7. An apparatus as claimed in claim 6 comprising means for estimating a strength of one or more of the transmission beams, and using the estimated strength to determine a valid preconfigured radio resource.

8. An apparatus as claimed in any preceding claim, comprising means for selecting a valid combination from possible combinations of:
(i) one of a plurality of modes for uplink data transmission during an inactive state of the UE; and
(ii) at least a pre-configured radio resource that is associated with a set of one or more beams at a base station.

9. An apparatus as claimed in any preceding claim, comprising means for switching to a mode of data transmission, wherein at least a set-up procedure for the mode of data transmission comprises configuration of radio resources for an aligned beam.

10. An apparatus as claimed in any preceding claim, comprising means configured to:
in dependence upon a current beam not being a strongest beam, using the validity information to select, for use, a combination of a configured grant mode for uplink data transmission and the strongest beam;
in dependence upon there being no beam sufficient for data transmission over a preconfigured resource, using the validity information to select, for use, one or more combinations of a random access mode for uplink data transmission and a strongest beam.

11. An apparatus as claimed in any preceding claim, comprising means for:
using the validity information to select, for use, a valid combination from possible combinations of: one of a plurality of modes for uplink data transmission; and an estimated strongest available beam for reception, at a base station, of uplink data transmission.

12. A method comprising:
receiving, at a user equipment, UE (110), from a base station (120) provisioning (220) of a plurality of pre-configured radio resources (240) for data transmission during an inactive state of the UE (110), wherein a pre-configured radio resource (240) is associated with a set of downlink transmission beams (202) of the base station;
acquiring at the UE (110) validity information (222) associated with one or more said pre-configured resources (240);
using at least the validity information (222) to determine, for use, a valid preconfigured radio resource (240).

13. A computer program (406), that when run by one or more processors, enable a process comprising:
receiving, at a user equipment, UE (110), from a base station (120) provisioning (220) of a plurality of pre-configured radio resources (240) for data transmission during an inactive state of the UE (110)
wherein a pre-configured radio resource (240) is associated with a set of downlink transmission beams (202) of the base station
acquiring at the UE (110) validity information (222) associated with one or more said pre-configured resources (240);
using at least the validity information (222) to determine, for use, a valid preconfigured radio resource (240).

14. A base station (120) comprising:
means for, to a user equipment, UE (110), provisioning (220) of a plurality of pre-configured radio resources (240) for data transmission during an inactive state of the UE (110),
wherein a pre-configured radio resource (240) is associated with a set of one or more downlink transmission beams (202) of the base station (120); and
means for transmitting, to the UE, validity information (222) associated with one or more said pre-configured resources (240) for constraining beam-received uplink data transmission during an inactive state of the UE to a valid combination from possible combinations of:
(i) one of a plurality of modes for uplink data transmission; and
(ii) a sub-set of beams for reception of uplink data transmission.

15. A system comprising
an apparatus as claimed in any of claims 1 to 11; and a base station as claimed in claim 14.

## Patentansprüche

1. Vorrichtung (110), umfassend Mittel zum :
Empfangen, an einer Teilnehmereinrichtung (110), UE, von einer Basisstation (120), einer Bereitstellung (220) einer Vielzahl von vorkonfigurierten Funkressourcen (240) für eine Datenübertragung während eines inaktiven Zustands der UE (110),
wobei eine vorkonfigurierte Funkressource (240) mit einem Satz von einem oder mehreren Downlinkübertragungsstrahlen (202) der Basisstation assoziiert ist;
Erfassen, an der UE (110), von Validitätsinformationen (222), die mit einer oder mehreren der vorkonfigurierten Ressourcen (240) assoziiert sind;
Verwenden mindestens der Validitätsinformationen, um eine gültige vorkonfigurierte Funkressource (240) zur Verwendung zu bestimmen.

2. Vorrichtung nach Anspruch 1, wobei die vorkonfigurierten Ressourcen Zufallszugriffskanal, RACH,-Präambeln und/oder für einen physischen Uplink-gemeinsam verwendeten Kanal, PUSCH, vorkonfigurierte Ressourcen sind, die mit PUSCH assoziiert sind.

3. Vorrichtung nach Anspruch 1 oder 2, ferner umfassend Mittel zum Uplinkdatenübertragen während eines inaktiven Zustands unter Verwendung der bestimmten gültigen vorkonfigurierten Funkressource.

4. Vorrichtung nach einem der vorhergehenden Ansprüche, umfassend Mittel zum Empfangen der Validitätsinformationen vom Netzwerk, wobei die Validitätsinformationen Folgendes umfassen:
einen oder mehrere Schwellwerte auf Basis einer Funkqualität und/oder einer Indikation, einer direkten oder einer indirekten, von einer oder mehreren gültigen vorkonfiguierten Ressourcen.

5. Vorrichtung nach Anspruch 4, umfassend Mittel, die dazu konfiguriert sind, ein Verwenden einer Funkressource, die mit einem stärksten Übertragungsstrahl assoziiert ist, und das Zurückfallen auf einen 4 Schritte umfassenden RACH-basierten Datenübertragungsmodus, wenn die Funkressource eine ungültige Funkressource ist, zu vermeiden.

6. Vorrichtung nach einem der vorhergehenden Ansprüche, wobei die Assoziierung direkt oder indirekt ist.

7. Vorrichtung nach Anspruch 6, umfassend Mittel zum Schätzen einer Stärke von einem oder mehreren der Übertragungsstrahlen und Verwenden der geschätzten Stärke, um eine gültige vorkonfiguierte Funkressource zu bestimmen.

8. Vorrichtung nach einem der vorhergehenden Ansprüche, umfassend Mittel zum Auswählen einer gültigen Kombination aus möglichen Kombinationen von :
(i) einem einer Vielzahl von Modi für eine Uplinkdatenübertragung während eines inaktiven Zustands der UE; und
(ii) mindestens einer vorkonfigurierte Funkressource, die mit einem Satz von einem oder mehreren Strahlen an einer Basisstation assoziiert ist.

9. Vorrichtung nach einem der vorhergehenden Ansprüche, umfassend Mittel zum Umschalten auf einen Modus der Datenübertragung, wobei mindestens eine Einrichtungsprozedur für den Modus der Datenübertragung eine Konfiguration von Funkressourcen für einen ausgerichteten Strahl umfasst.

10. Vorrichtung nach einem der vorhergehenden Ansprüche, umfassend Mittel, die zu Folgendem konfiguriert sind:
in Abhängigkeit davon, dass ein aktueller Strahl nicht ein stärkster Strahl ist, Verwenden der Validitätsinformationen zum Auswählen, zum Verwenden, einer Kombination eines konfigurierten Gewährungsmodus für eine Uplinkdatenübertragung und des stärksten Strahls;
in Abhängigkeit davon, dass für eine Datenübertragung über eine vorkonfigurierte Ressource kein ausreichender Strahl verfügbar ist, Verwenden der Validitätsinformationen zum Auswählen, zum Verwenden, von einer oder mehreren Kombinationen eines Zufallszugriffsmodus für eine Uplinkdatenübertragung und eines stärksten Strahls .

11. Vorrichtung nach einem der vorhergehenden Ansprüche, umfassend Mittel zum:
Verwenden der Validitätsinformationen zum Auswählen, zum Verwenden, einer gültigen Kombination aus möglichen Kombinationen von : einem einer Vielzahl von Modi für eine Uplinkdatenübertragung; und eines geschätzten stärksten verfügbaren Strahls zum Empfangen einer Uplinkdatenübertragung an einer Basisstation.

12. Verfahren, umfassend:
Empfangen, an einer Teilnehmereinrichtung (110), UE, von einer Basisstation (120), einer Bereitstellung (220) einer Vielzahl von vorkonfigurierten Funkressourcen (240) für eine Datenübertragung während eines inaktiven Zustands der UE (110),
wobei eine vorkonfigurierte Funkressource (240) mit einem Satz von Downlinkübertragungsstrahlen (202) der Basisstation assoziiert ist;
Erfassen, an der UE (110), von Validitätsinformationen (222), die mit einer oder mehreren der vorkonfigurierten Ressourcen (240) assoziiert sind;
Verwenden mindestens der Validitätsinformationen (222), um eine gültige vorkonfigurierte Funkressource (240) zur Verwendung zu bestimmen.

13. Computerprogramm (406), das, wenn es von einem oder mehreren Prozessoren ausgeführt wird, einen Prozess ermöglichen, der Prozess umfassend:
Empfangen, an einer Teilnehmereinrichtung (110), UE, von einer Basisstation (120), einer Bereitstellung (220) einer Vielzahl von vorkonfigurierten Funkressourcen (240) für eine Datenübertragung während eines inaktiven Zustands der UE (110)
wobei eine vorkonfigurierte Funkressource (240) mit einem Satz von Downlinkübertragungsstrahlen (202) der Basisstation assoziiert ist
Erfassen, an der UE (110), von Validitätsinformationen (222), die mit einer oder mehreren der vorkonfigurierten Ressourcen (240) assoziiert sind;
Verwenden mindestens der Validitätsinformationen (222), um eine gültige vorkonfigurierte Funkressource (240) zur Verwendung zu bestimmen.

14. Basisstation (120), umfassend:
Mittel zum, an eine Teilnehmereinrichtung (110), UE, Bereitstellen (220) einer Vielzahl von vorkonfigurierten Funkressourcen (240) für eine Datenübertragung während eines inaktiven Zustands der UE (110),
wobei eine vorkonfigurierte Funkressource (240) mit einem Satz von einem oder mehreren Downlinkübertragungsstrahlen (202) der Basisstation (120) assoziiert ist; und
Mittel zum Übertragen, an die UE, von Validitätsinformationen (222), die mit einer oder mehreren der vorkonfigurierten Ressourcen (240) assoziiert sind, um eine über einen Strahl empfangene Uplinkdatenübertragung während eines inaktiven Zustands der UE auf eine gültige Kombination aus möglichen Kombinationen von Folgendem einzuschränken:
(i) einem einer Vielzahl von Modi für eine Uplinkdatenübertragung; und
(ii) einem Untersatz von Strahlen für einen Empfang einer Uplinkdatenübertragung.

15. System, umfassend
eine Vorrichtung nach einem der Ansprüche 1 bis 11; und eine Basisstation nach Anspruch 14.

## Revendications

1. Appareil (110) comprenant des moyens pour :
recevoir, au niveau d'un équipement utilisateur, UE, (110) d'une station de base (120), le provisionnement (220) d'une pluralité de ressources radio préconfigurées (240) pour la transmission de données dans un état inactif de l'UE (110),
dans lequel une ressource radio préconfigurée (240) est associée à un ensemble d'un ou plusieurs faisceaux de transmission de liaison descendante (202) de la station de base ;
acquérir, au niveau de l'UE (110), des informations de validité (222) associées à une ou plusieurs desdites ressources préconfigurées (240) ;
utiliser au moins les informations de validité pour déterminer, en vue de son utilisation, une ressource radio préconfigurée (240) valide.

2. Appareil selon la revendication 1, dans lequel les ressources préconfigurées sont des préambules de canal d'accès aléatoire, RACH, et/ou sont des ressources préconfigurées de canal physique partagé de liaison montante, PUSCH, associées au PUSCH.

3. Appareil selon la revendication 1 ou 2, comprenant en outre des moyens de transmission de données de liaison montante dans un état inactif à l'aide de la ressource radio préconfigurée valide déterminée.

4. Appareil selon l'une des revendications précédentes comprenant des moyens pour recevoir les informations de validité du réseau, dans lequel les informations de validité comprennent :
un ou plusieurs seuils basés sur la qualité radio et/ou une indication directe ou indirecte d'une ou plusieurs ressources préconfigurées valides.

5. Appareil selon la revendication 4, comprenant des moyens configurés pour éviter d'utiliser une ressource radio associée au faisceau de transmission le plus fort et revenir à un mode de transmission de données basé sur le RACH en 4 étapes, si la ressource radio est une ressource radio non valide.

6. Appareil selon l'une des revendications précédentes, dans lequel l'association est directe ou indirecte.

7. Appareil selon la revendication 6, comprenant des moyens pour estimer une force d'un ou plusieurs des faisceaux de transmission, et pour utiliser la force estimée pour déterminer une ressource radio préconfigurée valide.

8. Appareil selon l'une des revendications précédentes, comprenant des moyens pour sélectionner une combinaison valide parmi les combinaisons possibles suivantes :
(i) un mode d'une pluralité de modes pour la transmission de données de liaison montante dans un état inactif de l'UE ; et
(ii) au moins une ressource radio préconfigurée qui est associée à un ensemble d'un ou plusieurs faisceaux au niveau d'une station de base.

9. Appareil selon l'une des revendications précédentes, comprenant des moyens pour passer à un mode de transmission de données, dans lequel au moins une procédure d'établissement du mode de transmission de données comprend la configuration de ressource radios pour un faisceau aligné.

10. Appareil selon l'une des revendications précédentes, comprenant des moyens configurés pour :
si un faisceau actuel n'est pas le faisceau le plus fort, utiliser les informations de validité pour sélectionner, en vue de son utilisation, une combinaison d'un mode d'octroi configuré pour la transmission de données de liaison montante et du faisceau le plus fort ;
en l'absence d'un faisceau suffisant pour la transmission de données sur une ressource préconfigurée, utiliser les informations de validité pour sélectionner, en vue de son utilisation, une ou plusieurs combinaisons d'un mode d'accès aléatoire pour la transmission de données de liaison montante et du faisceau le plus fort.

11. Appareil selon l'une des revendications précédentes, comprenant des moyens pour :
utiliser les informations de validité pour sélectionner, en vue de son utilisation, une combinaison valide parmi les combinaisons possibles suivantes : un mode d'une pluralité de modes pour la transmission de données de liaison montante ; et un faisceau disponible estimé le plus fort pour la réception, au niveau d'une station de base, d'une transmission de données de liaison montante.

12. Procédé comprenant :
la réception, au niveau d'un équipement utilisateur, UE (110), d'une station de base (120), du provisionnement (220) d'une pluralité de ressources radio préconfigurées (240) pour la transmission de données dans un état inactif de l'UE (110), dans lequel une ressource radio préconfigurée (240) est associée à un ensemble de faisceaux de transmission de liaison descendante (202) de la station de base ;
l'acquisition, au niveau de l'UE (110), d'informations de validité (222) associées à une ou plusieurs desdites ressources préconfigurées (240) ;
l'utilisation d'au moins les informations de validité (222) pour déterminer, en vue de son utilisation, une ressource radio préconfigurée (240) valide.

13. Programme informatique (406) qui, lorsqu'il est exécuté par un ou plusieurs processeurs, permet un processus comprenant :
la réception, au niveau d'un équipement utilisateur, UE (110), d'une station de base (120), du provisionnement (220) d'une pluralité de ressources radio préconfigurées (240) pour la transmission de données dans un état inactif de l'UE (110)
dans lequel une ressource radio préconfigurée (240) est associée à un ensemble de faisceaux de transmission de liaison descendante (202) de la station de base
l'acquisition, au niveau de l'UE (110), d'informations de validité (222) associées à une ou plusieurs desdites ressources préconfigurées (240) ;
l'utilisation d'au moins les informations de validité (222) pour déterminer, en vue de son utilisation, une ressource radio préconfigurée (240) valide.

14. Station de base (120) comprenant :
des moyens de provisionnement (220) de ressources (240) à un équipement utilisateur, UE (110), pour la transmission de données dans un état inactif de l'UE (110),
dans laquelle une ressource radio préconfigurée (240) est associée à un ensemble d'un ou plusieurs faisceaux de transmission de liaison descendante (202) de la station de base (120) ; et
des moyens pour transmettre à l'UE des informations de validité (222) associées à une ou plusieurs desdites ressources préconfigurées (240) pour limiter la transmission de données de liaison montante reçues par faisceau dans un état inactif de l'UE à une combinaison valide parmi les combinaisons possibles suivantes :
(i) un mode d'une pluralité de modes pour la transmission de données de liaison montante ; et
(ii) un sous-ensemble de faisceaux pour la réception de transmission de données de liaison montante.

15. Système comprenant
un appareil selon l'une des revendications 1 à 11 ; et une station de base selon la revendication 14.
